# EUROPEAN PATENT APPLICATION

(11) **EP 4 826 810 A1**
(43) Date of publication of application: **21.10.2026**
(21) Application number: 24903247.5
(22) Date of filing: 26.08.2024
(51) Int. Cl.: H01M 8/18, H01M 8/02, H01M 8/2455, H01M 8/2475

(54) **REDOX FLOW BATTERY SYSTEM**

(30) Priority: 15.12.2023 JP 2023212140
(71) Applicant: Sumitomo Electric Industries, Ltd., Osaka-shi, Osaka 541-0041 (JP)
(72) Inventor: KUWABARA, Masahiro, Osaka-shi, Osaka 541-0041 (JP)
(74) Representative: Müller-Boré & Partner Patentanwälte PartG mbB
(86) International application number: PCT/JP2024/030209
(87) International publication number: WO 2025/126584

(57) **Abstract**

A redox flow battery system comprises: a main container in which battery cells are accommodated; and a concrete tank having a first space in which an electrolyte to be supplied to the battery cells is reserved.

## Description

### TECHNICAL FIELD

The present disclosure relates to a redox flow battery system. This application claims priority based on Japanese Patent Application No. 2023-212140 filed on December 15, 2023. All the contents described in the Japanese Patent application are incorporated herein by reference.

### BACKGROUND ART

A redox flow battery system of PTL 1 comprises a battery container in which battery cells are accommodated, a positive electrolyte tank container in which a positive electrolyte tank for reserving a positive electrolyte is accommodated, and a negative electrolyte tank container in which a negative electrolyte tank for reserving a negative electrolyte is accommodated.

### CITATION LIST

### PATENT LITERATURE

PTL 1: International Publication No. 2019/087366

### SUMMARY OF INVENTION

A redox flow battery system of the present disclosure comprises: a main container in which battery cells are accommodated; and a concrete tank having a first space in which an electrolyte to be supplied to the battery cells is reserved.

### BRIEF DESCRIPTION OF DRAWINGS

[Fig. 1] Fig. 1 is a partial cross-sectional view showing a redox flow battery system of Embodiment 1.
[Fig. 2] Fig. 2 is a plan view showing the redox flow battery system of Embodiment 1.
[Fig. 3] Fig. 3 is a cross-sectional view taken along a line III-III of Fig. 2.
[Fig. 4] Fig. 4 is a schematic cross-sectional view showing a fixing structure that fixes together a first container and a concrete tank that the redox flow battery system of Embodiment 1 comprises.
[Fig. 5] Fig. 5 is a plan view showing a redox flow battery system of Embodiment 2.
[Fig. 6] Fig. 6 is a cross-sectional view taken along a line VI-VI of Fig. 5.
[Fig. 7] Fig. 7 is a cross-sectional view showing a redox flow battery system of Embodiment 3.
[Fig. 8] Fig. 8 is a perspective view showing a redox flow battery system of Embodiment 4.
[Fig. 9] Fig. 9 is a perspective view showing a redox flow battery system of Embodiment 5.
[Fig. 10] Fig. 10 is a perspective view showing a redox flow battery system of Embodiment 6.
[Fig. 11] Fig. 11 is a perspective view showing a redox flow battery system of Embodiment 7.

### DETAILED DESCRIPTION

### [Problem to be Solved by the Present Disclosure]

A redox flow battery system with a large battery capacity is desired. It is substantially unrealistic to manufacture at a factory a tank having a large reservation volume and then transport the tank to an installation site. When a tank container is a general dry container as in PTL 1, the tank container is limited in size. For this reason, in order to construct a redox flow battery system with a large battery capacity, it is necessary to transport a plurality of tank containers to the installation site.
However, transportation of a tank whose reservation volume exceeds, for example, a volume of a 40-foot container, and furthermore, a volume of a 53-foot container, is extremely difficult. In addition, at the installation site, it is necessary to connect the tank containers to one another by piping so as to obtain a desired volume. Such a connection point is a point where an electrolyte can leak, and is thus a structurally weak point. Another process such as installation of a bund for preventing leakage of the electrolyte is necessary. Further, it may be necessary to adjust the flow of the electrolyte or increase the number of pumps so that the electrolyte flows through the plurality of tank containers.

One object of the present disclosure is to provide a redox flow battery system in which a battery capacity can be easily increased.

### [Advantageous Effect of the Present Disclosure]

A redox flow battery system of the present disclosure can easily achieve an increased battery capacity.

### <<Description of Embodiments of the Present Disclosure>>

First, embodiments of the present disclosure will be listed and described.
(1) A redox flow battery system of one aspect of the present disclosure comprises: a main container in which a battery cell is accommodated; and a concrete tank having a first space in which an electrolyte to be supplied to the battery cell is reserved.

The concrete tank is constructed at a site where the redox flow battery system is installed. Therefore, it is unnecessary to initially manufacture the tank at a factory for reserving the electrolyte and subsequently transport and install the tank at the site. The redox flow battery system according to item (1) can easily increase battery capacity. The concrete tank is superior in durability to a tank made of resin or metal. The redox flow battery system according to item (1) can thus be used for a long period of time.

(2) The redox flow battery system according to item (1) may comprise a liquid containment structure having a bund surrounding a periphery of the main container. At least a part of the bund is formed of an outer wall of the concrete tank.

The redox flow battery system according to item (2) can prevent an electrolyte sent from the concrete tank to the main container and leaking from the main container from leaking to an outside of the bund. When the redox flow battery system according to item (2) that comprises the concrete tank having an outer wall also serving as at least a part of the bund is compared with a case without the concrete tank having an outer wall also serving as the bund, the former facilitates reducing an amount of a constituent material used for the bund. The redox flow battery system according to item (2) can be constructed in a reduced period of time.

(3) The redox flow battery system according to item (2) may comprise a first container disposed on an upper surface of a ceiling portion of the concrete tank, wherein the first container may be the main container.

When the redox flow battery system according to item (3) is compared with a case with the first container and the concrete tank installed so as to be horizontally adjacent to each other, the former easily achieves a reduced footprint.

(4) The redox flow battery system according to item (2) may comprise a sub-container in which the electrolyte to be supplied to the battery cell is reserved, and a first container disposed on an upper surface of a ceiling portion of the concrete tank, wherein the first container may be the sub-container. The main container is disposed on an upper surface of a ceiling portion of the first container.

The redox flow battery system according to item (4) can easily reduce footprint and, in addition, can easily increase battery capacity.

(5) The redox flow battery system according to item (3) or (4), wherein the concrete tank may have a wall portion projecting upward from the upper surface of the ceiling portion of the concrete tank so as to surround a periphery of the first container, the liquid containment structure may further have a base on which the first container is disposed, the bund may be the wall portion, and the base may be the ceiling portion of the concrete tank.

The redox flow battery system according to item (5) can prevent an electrolyte sent from the concrete tank to the main container and leaking from the main container from flowing downward from the upper surface of the ceiling portion of the concrete tank.

(6) The redox flow battery system according to any one of items (3) to (5), wherein the concrete tank may have a fixing structure to fix the first container to the upper surface of the ceiling portion of the concrete tank.

When the redox flow battery system according to item (6) encounters a natural disaster such as an earthquake or a typhoon, the first container, which is a heavy object, is less likely to be positionally offset on the upper surface of the ceiling portion of the concrete tank.

(7) The redox flow battery system according to any one of items (3) to (6) may further comprise a pump that passes the electrolyte to the battery cell, wherein the concrete tank may further have a second space in which the pump is accommodated.

When the redox flow battery system according to item (7) is compared with a case with the pump disposed above the ceiling portion of the concrete tank, the former allows the pump to have a low head. The redox flow battery system according to item (7) that allows the pump to have a low head facilitates reducing the pump in size. The redox flow battery system according to item (7) that allows the pump to have a low head can send the electrolyte to a battery cell disposed above the ceiling portion of the concrete tank even without priming.

(8) The redox flow battery system according to item (7), wherein the first container may be disposed on the upper surface of the ceiling portion of the concrete tank at a location above the second space.

When the redox flow battery system according to item (8) is compared with a case with the first container disposed on the upper surface of the ceiling portion of the concrete tank at a position offset from a location above the second space, the former facilitates reducing in length a pipe circulating the electrolyte. The redox flow battery system according to item (8) can thus reduce the pressure loss of the pump. Thus, the redox flow battery system according to item (8) facilitates reducing the pump in size.

(9) The redox flow battery system according to any one of items (3) to (8), wherein the first container may be disposed so as to overlap a side wall portion of the concrete tank.

When the redox flow battery system according to item (9) is viewed from above, the first container overlaps a side wall portion of the concrete tank, and when this is compared with a case without the first container overlapping the side wall portion of the concrete tank, the former allows the first container to be stably supported.

(10) The redox flow battery system according to any one of items (1) to (9), wherein the concrete tank may have a rib projecting toward the first space.

The redox flow battery system according to item (10) can enhance the concrete tank in strength. The redox flow battery system according to item (10) can thus stably support the first container.

(11) The redox flow battery system according to any one of items (1) to (10), wherein the concrete tank may have a first concrete tank and a second concrete tank horizontally adjacent to each other, and a side wall portion of the first concrete tank and a side wall portion of the second concrete tank may have a common wall portion shared by each other.

When the redox flow battery system according to item (11) is compared with a case with the first concrete tank and the second concrete tank disposed in contact with each other in a horizontal direction such that the side wall portions of the first and second concrete tanks are not shared by each other, the former can reduce an amount of a constituent material used for the concrete tank. This facilitates constructing the concrete tank in a reduced period of time and in addition, reducing a cost therefor.

(12) The redox flow battery system according to any one of items (1) to (11), wherein a side wall portion of the concrete tank may have a wall portion for additional installation, shared with a side wall portion of a concrete tank additionally installed.

The redox flow battery system according to item (12) can be manufactured by adding a concrete tank identical in structure to an existing concrete tank to the existing concrete tank. The redox flow battery system according to item (12) can easily achieve an increased battery capacity.

(13) The redox flow battery system according to item (2), wherein the main container and the concrete tank may be horizontally spaced.

The redox flow battery system according to item (13) has a high degree of freedom in how the main container and the concrete tank are disposed.

(14) The redox flow battery system according to item (13), wherein the bund may have a side wall portion of the concrete tank.

The redox flow battery system according to item (14) has the concrete tank with a side wall portion also serving as a bund, and when this is compared with a case without the concrete tank having a side wall portion serving as the bund, the former facilitates reducing an amount of a constituent material used for the bund.

(15) The redox flow battery system according to item (14), wherein the concrete tank may have a first concrete tank and a second concrete tank horizontally spaced so as to sandwich the main container, the liquid containment structure may further have a base on which the main container is disposed, the bund may have: a first outer wall portion of the first concrete tank; a second outer wall portion of the second concrete tank; and a first coupling wall portion and a second coupling wall portion coupling the first outer wall portion and the second outer wall portion together so as to sandwich the main container, and the base may be surrounded by the first outer wall portion, the second outer wall portion, the first coupling wall portion, and the second coupling wall portion.

The redox flow battery system according to item (15) is compared with a case with the main container disposed on the upper surface of the ceiling portion of the concrete tank, the former has a higher degree of freedom in disposing the main container and the concrete tank.

(16) The redox flow battery system according to item (15) may comprise a sub-container that reserves the electrolyte to be supplied to the battery cell, wherein the sub-container may be disposed inside the bund.

The redox flow battery system according to item (16) can provide a large battery capacity.

### <<Details of Embodiments of the Present Disclosure>>

Hereinafter, specific examples of a redox flow battery system of the present disclosure will be described based on the drawings. In the figures, identical components are identically denoted. Shapes, sizes, positional relationships, and the like shown in each figure are represented for the purpose of clarifying the description, and do not necessarily represent actual shapes, sizes, positional relationships, or the like. In the figures, identical components are identically denoted. Note that the present invention is not limited to the configurations shown in the embodiments; rather, it is indicated by the terms of the claims, and is intended to include any modification falling within the meaning and scope equivalent to the terms of the claims.

### <<Embodiment 1>>

### [Redox flow battery system]

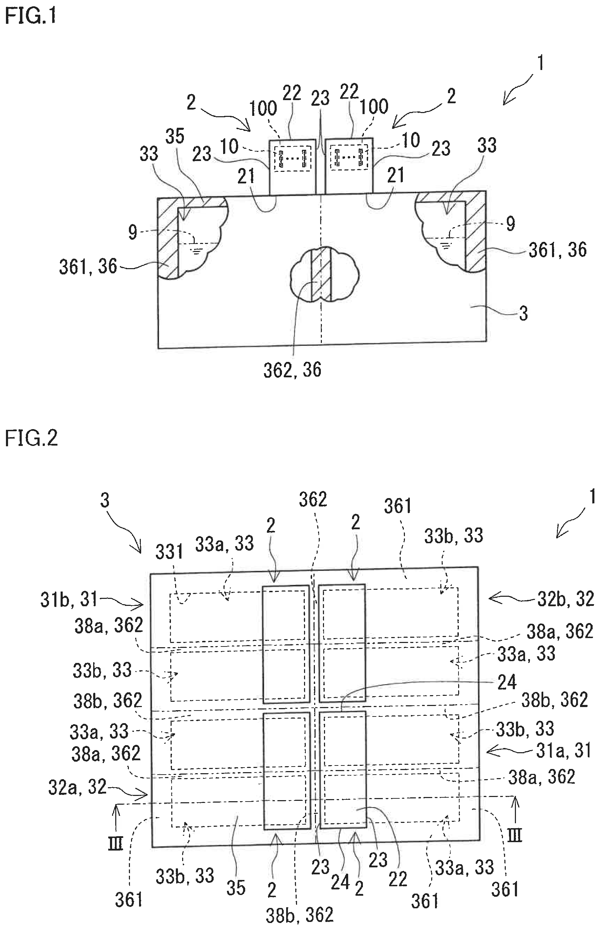

A redox flow battery system 1 of Embodiment 1 will be described with reference to Fig. 1 to Fig. 4. As shown in Fig. 1, redox flow battery system 1 comprises a battery cell 10. Battery cell 10 is electrically charged and discharged. An electrolyte 9 is supplied to battery cell 10. One of features of redox flow battery system 1 of Embodiment 1 is that it comprises a main container 2 in which battery cell 10 is accommodated and a concrete tank 3 having a first space 33 in which electrolyte 9 to be supplied to battery cell 10 is reserved. In Fig. 1 to Fig. 3, for the sake of illustration, a center line of a thickness of a side wall portion 36 partitioning adjacent first spaces 33 is indicated by a two-dot chain line. In Fig. 2, for the sake of illustration, an inner contour line of side wall portion 36 of concrete tank 3 is indicated by a broken line.

### [Main Container]

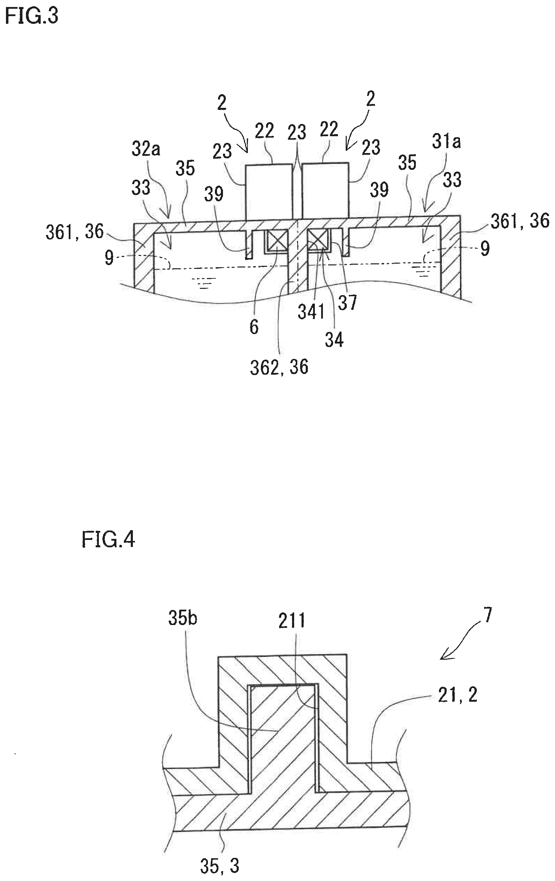

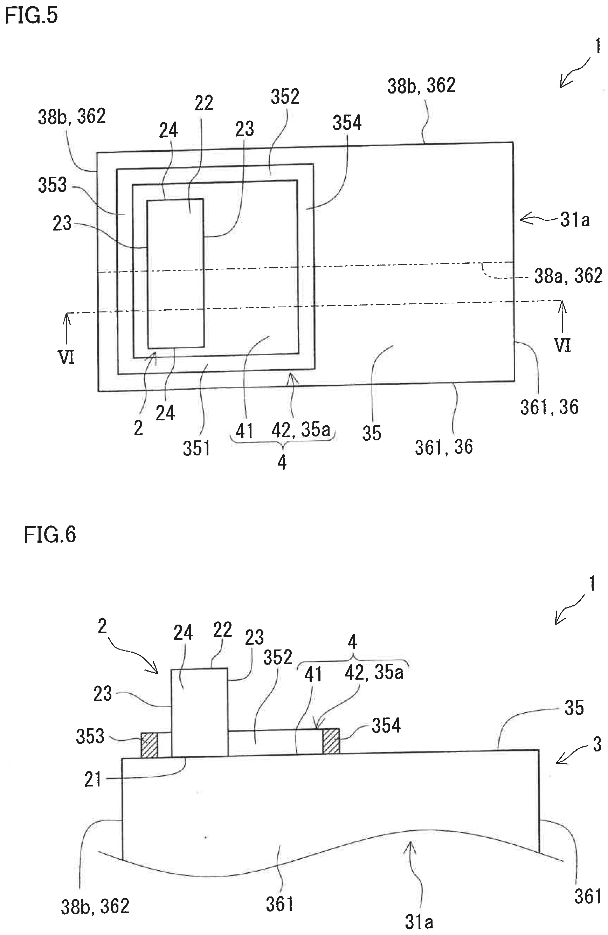

Battery cell 10 is accommodated inside main container 2. Battery cell 10 is a known battery cell. Battery cell 10 is normally formed inside a structure called a cell stack 100. That is, cell stack 100 is accommodated inside main container 2. Cell stack 100 includes a plurality of battery cells 10 stacked in layers. Cell stack 100 is a known cell stack. In Fig. 2 and Fig. 3, for the sake of illustration, battery cell 10 and cell stack 100 are not shown. Battery cell 10 and cell stack 100 are also not shown in Fig. 5 to Fig. 11 referred to in other embodiments described later.

In the present example, although not shown, a feed pipe for feeding electrolyte 9 to battery cell 10 and a drainage pipe for draining electrolyte 9 from battery cell 10 are further disposed inside main container 2. A first end of the feed pipe is connected to a supply pipe described later, and a second end of the feed pipe is connected to battery cell 10. A first end of the drainage pipe is connected to battery cell 10, and a second end of the drainage pipe is connected to a return pipe described later. For example, a bottom portion 21 of main container 2 is provided with a through hole through which the feed pipe and the drainage pipe are passed. A pump 6 (Fig. 3) for circulating electrolyte 9 to battery cell 10 is connected to the feed pipe. In the present example, pump 6 is not disposed inside main container 2. In contrast to the present example, pump 6 may be disposed inside main container 2. Although not shown, a control device for controlling an operation of pump 6 or the like may be disposed inside main container 2. The control device is, for example, a computer.

A shape of main container 2 is typically a rectangular parallelepiped. Main container 2 includes rectangular bottom portion 21 located on a target of installation, a rectangular ceiling portion 22 facing bottom portion 21, two first side wall portions 23 interconnecting long sides of bottom portion 21 and ceiling portion 22, and two second side wall portions 24 (Fig. 2) interconnecting short sides of bottom portion 21 and ceiling portion 22. Although not shown, at least one of two first side wall portions 23 and two second side wall portions 24 is provided with a door that can be opened and closed so that an operator can access the inside of main container 2. A material of main container 2 is, for example, steel. A specific example of the steel is a rolled steel material SS400 for general structure.

The size of main container 2 can be appropriately selected according to a battery output or the like of redox flow battery system 1. As main container 2 is larger, a larger number of battery cells 10 can be accommodated in main container 2, and redox flow battery system 1 can have a larger battery output. Main container 2 is, for example, a dry container. The dry container is, for example, an international ocean freight container conforming to ISO 1496-1:2013, an ISO standard. Main container 2 is typically a 20-foot container, a 40-foot container, a 45-foot container or a 53-foot container, or a 20-foot high cube container, a 40-foot high cube container, a 45-foot high cube container or a 53-foot high cube container larger in height than the 20-, 40-, 45- or 53-foot containers. The size of main container 2 is not limited to the above.

Main container 2 may be a housing that has bottom portion 21, ceiling portion 22, side wall portions 23, 24, and a door and has a volume capable of accommodating a predetermined number of battery cells 10, and does not have to be an international ocean container. For example, main container 2 may be a housing assembled by an outer frame provided in the form of a rectangular parallelepiped so as to surround accommodated items such as battery cell 10, and a top plate, a floor plate, and a side wall plate attached to the outer frame. Further, main container 2 may include a shelf so that accommodated items such as a battery cell are disposed at a predetermined position in the main container. The accommodated items may be fixed to the outer frame and the shelf. **In** a case where main container 2 includes an outer frame, the weight of the accommodated items can be supported by the outer frame by fixing the shelf to a member constituting the outer frame.

The number of main containers 2 is not particularly limited and can be appropriately selected according to a required battery output. Fig. 2 shows an example in which redox flow battery system 1 comprises four main containers 2.

### [Concrete Tank]

Concrete tank 3 has an internal space in which electrolyte 9 is reserved. In Fig. 2, electrolyte 9 is not shown for the sake of illustration. As shown in Fig. 2, concrete tank 3 has an inner wall portion 362 that partitions an internal space into a plurality of first spaces 33. Concrete tank 3 has an inner surface including a plurality of first inner surfaces 331. Each first inner surface 331 constitutes each first space 33. Electrolyte 9 reserved in one first space 33 is either a positive electrolyte supplied to a positive electrode cell of battery cell 10 or a negative electrolyte supplied to a negative electrode cell of battery cell 10. The positive and negative electrolytes are known positive and negative electrolytes. A coating layer made of an electrically insulating material resistant to electrolyte, for example, resin, may be provided at a portion of each first inner surface 331 that the electrolyte comes into contact with. The number and size of first spaces 33 are not particularly limited and can be appropriately selected according to a required battery capacity. Concrete tank 3 of the present example has eight first spaces 33.

Concrete tank 3 is constructed at a site where redox flow battery system 1 is installed. Therefore, it is unnecessary to initially manufacture a tank at a factory for reserving electrolyte 9 and subsequently transport and install the tank at the site. Therefore, redox flow battery system 1 can easily increase battery capacity. Concrete tank 3 is superior in durability to a tank made of resin or metal. Therefore, redox flow battery system 1 can be used for a long period of time. Concrete tank 3 is less likely to leak electrolyte 9. Concrete tank 3 is, for example, a tank made of reinforced concrete.

The shape of concrete tank 3 is not particularly limited. In the present example, the shape of concrete tank 3 is a rectangular parallelepiped. Concrete tank 3 of the present example includes a rectangular bottom portion located on a target of installation, a rectangular ceiling portion 35 facing the bottom portion, and side wall portion 36 interconnecting the bottom portion and ceiling portion 35.

Although not shown, ceiling portion 35 is provided with a door that can be opened and closed so that an operator can access the inside of concrete tank 3. Side wall portion 36 has an outer wall portion 361 and inner wall portion 362. Outer wall portion 361 interconnects an outer peripheral edge of the bottom portion and an outer peripheral edge of ceiling portion 35. Inner wall portion 362 partitions the internal space surrounded by the bottom portion, ceiling portion 35, and outer wall portion 361 into a plurality of first spaces 33. Inner wall portion 362 interconnects a portion of the bottom portion inner than the outer peripheral edge thereof, a portion of ceiling portion 35 inner than the outer peripheral edge thereof, and outer wall portion 361. In the present example, inner wall portion 362 partitions the internal space into eight first spaces 33. Outer wall portion 361 has an outer surface facing an outside of concrete tank 3 and an inner surface facing electrolyte 9 reserved inside each first space 33. Inner wall portion 362 has an inner surface facing electrolyte 9 reserved inside one first space 33 of adjacent first spaces 33 and an inner surface facing electrolyte 9 reserved inside the other first space 33. These inner surfaces are a part of first inner surface 331.

Inner wall portion 362 receives pressure exerted by electrolyte 9 reserved in first spaces 33 adjacent with inner wall portion 362 interposed so as to clamp inner wall portion 362. This pressure helps inner wall portion 362 to hold strength for maintaining a state erect from the bottom portion. This allows inner wall portion 362 to have a reduced thickness. Therefore, redox flow battery system 1 can reduce an amount of a constituent material to be used for concrete tank 3. As inner wall portion 362 can be reduced in thickness, concrete tank 3 can have a reduced footprint for a given volume of each first space 33. As inner wall portion 362 can be reduced in thickness, each first space 33 can be increased in volume for a given footprint of concrete tank 3.

Concrete tank 3 of the present example has a first concrete tank 31 and a second concrete tank 32 which are horizontally adjacent to each other. The number of first concrete tanks 31 and second concrete tanks 32 is not particularly limited and can be appropriately selected according to the required battery capacity. Fig. 2 shows an example in which concrete tank 3 has two first concrete tanks 31a, 31b and two second concrete tanks 32a, 32b. In Fig. 2, first concrete tanks 31a, 31b are disposed at a lower right of the figure and an upper left of the figure, and second concrete tanks 32a, 32b are disposed at a lower left of the figure and an upper right of the figure. Each of first concrete tanks 31a, 31b and each of second concrete tanks 32a, 32b have first spaces 33a, 33b aligned vertically in the figure. A positive electrolyte is reserved in first space 33a of each of first concrete tanks 31a, 31b and each of second concrete tanks 32a, 32b, and a negative electrolyte is reserved in first space 33b thereof. The positive and negative electrolytes reserved in each of first concrete tanks 31a, 31b are supplied to battery cells inside main container 2 disposed on ceiling portion 35 of each of first concrete tanks 31a, 31b. The positive and negative electrolytes reserved in each of second concrete tanks 32a, 32b are supplied to battery cells inside main container 2 disposed on ceiling portion 35 of each of second concrete tanks 32a, 32b. Concrete tank 3 of the present example is composed of first concrete tank 31a previously installed, and two second concrete tanks 32a, 32b and one first concrete tank 31b additionally installed.

Inner wall portion 362 of concrete tank 3 is a common wall portion 38a shared as side wall portion 36 constituting adjacent first spaces 33. Common wall portion 38a is smaller in thickness than outer wall portion 361 that is not shared. Some of common wall portions 38a are a wall portion 38b for additional installation, as follows:
- Common wall portion 38a between first concrete tank 31a and second concrete tank 32a; and
- Common wall portion 38a between first concrete tank 31a and second concrete tank 32b.

A part of wall portion 38b for additional installation is outer wall portion 361 of first concrete tank 31a before additional installation. At the time of additional installation, a necessary process may be performed for inner wall portion 362 when utilizing outer wall portion 361 for wall portion 38b for additional installation. The process is, for example, polishing outer wall portion 361 and forming the coating layer. The process allows wall portion 38b for additional installation to be smaller in thickness than outer wall portion 361.

In the present example, a contour of each first space 33 viewed from above is rectangular. In the present example, a contour of side wall portion 36 constituting each first space 33 viewed from above is also rectangular. Note that the contour of first space 33 viewed from above and a shape as viewed from above of side wall portion 36 constituting each first space 33 may be similar shapes. For example, the contour as viewed from above of side wall portion 36 constituting first space 33a of first concrete tank 31a is a shape surrounded by a contour line of a long outer wall portion 361, a contour line of a short outer wall portion 361, a center line of the thickness of a long inner wall portion 362, and a center line of the thickness of a short inner wall portion 362 indicated below. The long outer wall portion 361 is outer wall portion 361 located in the plane of the figure below a lower right first space 33 and extending laterally. The short outer wall portion 361 is outer wall portion 361 located in the plane of the figure to the right of the lower right first space 33 and extending vertically. The long inner wall portion 362 is inner wall portion 362 partitioning first space 33a and first space 33b of first concrete tank 31a. The short inner wall portion 362 is inner wall portion 362 partitioning first space 33a of first concrete tank 31a and first space 33b of second concrete tank 32a.

As shown in Fig. 3, concrete tank 3 of the present example includes a rib 39 projecting toward each first space 33. Rib 39 facilitates enhancing concrete tank 3 in strength. Rib 39 of the present example is provided on ceiling portion 35 so as to project from a lower surface of ceiling portion 35 toward the bottom portion of concrete tank 3. How many ribs 39 are formed and where are not particularly limited and can be appropriately selected. Rib 39 may be provided on the lower surface of ceiling portion 35 at a location under main container 2. In particular, rib 39 may be provided on the lower surface of ceiling portion 35 at a location under first side wall portion 23 of main container 2.

Inside concrete tank 3 of the present example, although not shown, a supply pipe for sending electrolyte 9 reserved in each first space 33 to the feed pipe described above and a return pipe for returning electrolyte 9 passed through the drainage pipe to each first space 33 are disposed. For example, ceiling portion 35 of concrete tank 3 is provided with a through hole through which each supply pipe and each return pipe are passed.

As shown in Fig. 3, concrete tank 3 of the present example further has a second space 34 for accommodating pump 6 that passes to battery cell 10 electrolyte 9 reserved inside each first space 33. In Fig. 3, only concrete tank 3 is shown in cross section for the sake of illustration. The inner surface of concrete tank 3 has a second inner surface 341 constituting second space 34. The number of second spaces 34 is the same as the number of pumps 6, and is the same as the number of first spaces 33 in the present example. Concrete tank 3 of the present example has eight second spaces 34. Each second space 34 is adjacent to first space 33. Each first space 33 and each second space 34 are separated by a partition 37. A location where each second space 34 is provided is not particularly limited and can be appropriately selected. As shown in Fig. 3, in first concrete tank 31a and second concrete tank 32a, each second space 34 is provided at a corner between ceiling portion 35 and inner wall portion 362 located between first concrete tank 31a and second concrete tank 32a.

### [Form of Arrangement]

In the present example, as shown in Fig. 2, each main container 2 is disposed on the upper surface of ceiling portion 35 of each first concrete tank 31 or each second concrete tank 32 so that a direction along the length of each main container 2 is along a direction orthogonal to the length of each first concrete tank 31 or each second concrete tank 32. As shown in Fig. 3, each main container 2 is disposed on the upper surface of ceiling portion 35 of concrete tank 3 at a location above second space 34. As shown in Fig. 2 and Fig. 3, each main container 2 is disposed so as to overlap an upper portion of at least one of side wall portion 36 and rib 39. In the present example, each main container 2 is disposed so as to overlap upper portions of both side wall portion 36 and rib 39. Specifically, as shown in Fig. 2 and Fig. 3, one first side wall portion 23 of each main container 2 overlaps an upper portion of inner wall portion 362 located between first concrete tank 31 and second concrete tank 32 laterally aligned in the plane of the figure, and as shown in Fig. 3, another first side wall portion 23 thereof overlaps an upper portion of rib 39. One second side wall portion 24 of each main container 2 overlaps an upper portion of outer wall portion 361, and another second side wall portion 24 thereof overlaps an upper portion of inner wall portion 362 located between first concrete tank 31 and second concrete tank 32 vertically aligned in the plane of the figure.

In contrast to the present example, each main container 2 may be disposed on the upper surface of ceiling portion 35 of each first concrete tank 31 or each second concrete tank 32 so that the direction along the length of each main container 2 is along a direction along the length of each first concrete tank 31 or each second concrete tank 32. In this case, for example, an intermediate point of each second side wall portion 24 of each main container 2 may overlap an upper portion of inner wall portion 362 located between first spaces 33 of each first concrete tank 31 or each second concrete tank 32.

As shown in Fig. 4, concrete tank 3 of the present example may include a fixing structure 7 to fix each main container 2 to the upper surface of ceiling portion 35 of concrete tank 3. Fixing structure 7 refers to a structure that restricts movement of each main container 2 at least along the upper surface of ceiling portion 35. In addition to restricting movement of each main container 2 along the upper surface, fixing structure 7 may be a structure that restricts movement of each main container 2 upward from the upper surface of ceiling portion 35. Fixing structure 7 is not particularly limited as long as it can fix each main container 2 to concrete tank 3, and can be appropriately selected. Fixing structure 7 may for example be a projection 35b that fits into a recess 211 provided at bottom portion 21 of each main container 2. In contrast to the present example, fixing structure 7 may be a twist lock used to fix a dry container. Each main container 2 has an engagement unit to be engaged with the twist lock, and if fixing structure 7 is the twist lock, there is no need to additionally modify the structure of each main container 2. How many fixing structures 7 are installed and where are not particularly limited and can be appropriately selected.

### <<Embodiment 2>>

Redox flow battery system 1 of Embodiment 2 will be described with reference to Fig. 5 and Fig. 6. Redox flow battery system 1 of Embodiment 2 is different from redox flow battery system 1 of Embodiment 1 in that the former further comprises a liquid containment structure 4. The following description focuses on differences from Embodiment 1. Some configuration and effect similar to those in Embodiment 1 may not be described. In Fig. 5 and Fig. 6, for the sake of illustration, only first concrete tank 31a in Fig. 2 is shown as concrete tank 3. In Fig. 6, for the sake of illustration, only a bund 42 provided in liquid containment structure 4 is shown in cross section.

### [Liquid Containment Structure]

Liquid containment structure 4 has a base 41 on which main container 2 is disposed, and bund 42 surrounding the periphery of main container 2. Even if electrolyte 9 leaks from main container 2, liquid containment structure 4 can keep leaked electrolyte 9 inside liquid containment structure 4. This suppresses spreading of the leaked electrolyte 9 to an outside of bund 42. Bund 42 is configured to project upward from an upper surface of base 41. The height of bund 42 and the area of a region surrounded by bund 42 can be appropriately selected according to a maximum amount of electrolyte 9 leaked. The maximum amount is, for example, an amount of electrolyte 9 contained in all circulation system equipment such as all piping inside main container 2, cell stack 100, and pump 6. At least a part of bund 42 is formed of an outer wall of concrete tank 3. The outer wall is a wall having a surface facing an outside, and is ceiling portion 35 and outer wall portion 361.

Base 41 of the present example is a part of ceiling portion 35 of concrete tank 3. Bund 42 of the present example is a wall portion 35a of concrete tank 3. Wall portion 35a is configured to project upward from the upper surface of ceiling portion 35 of concrete tank 3 so as to surround the periphery of main container 2. This suppresses flowing of leaked electrolyte 9 downward from the upper surface of ceiling portion 35. In the present example, a shape of wall portion 35a viewed from above is in the form of a rectangular frame. Wall portion 35a of the present example is composed of a first wall portion 351 and a second wall portion 352 extending along second side wall portion 24 of main container 2, and a third wall portion 353 and a fourth wall portion 354 extending along first side wall portion 23 of main container 2.

As shown in Fig. 5, first wall portion 351, second wall portion 352, third wall portion 353, and fourth wall portion 354 as viewed from above are positioned as follows. First wall portion 351 is provided at a location close to long outer wall portion 361 located at a lower side in the figure, or at a location overlapping an upper portion of long outer wall portion 361. Second wall portion 352 is provided at a location close to inner wall portion 362 located between first concrete tank 31a and second concrete tank 32b shown in Fig. 2, or at a location overlapping an upper portion of that inner wall portion 362. Third wall portion 353 is provided at a location close to inner wall portion 362 located between first concrete tank 31a and second concrete tank 32a shown in Fig. 2, or at a location overlapping that inner wall portion 362. Fourth wall portion 354 is provided intermediately between first side wall portion 23 located on a right side in the figure and short outer wall portion 361 located on a right side in the figure. In contrast to the present example, fourth wall portion 354 may be provided at a location closer to first side wall portion 23 than it is provided intermediately as above. In contrast to the present example, fourth wall portion 354 may be provided at a location closer to the short outer wall portion 361 than it is provided intermediately as above, or the fourth wall portion may be provided at a location overlapping an upper portion of the short outer wall portion 361.

### <<Embodiment 3>>

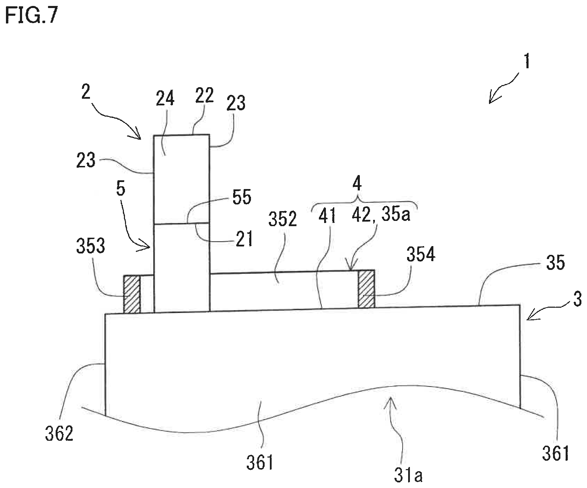

Redox flow battery system 1 of Embodiment 3 will be described with reference to Fig. 7. Redox flow battery system 1 of Embodiment 3 is different from redox flow battery system 1 of Embodiment 2 in that the former further comprises a sub-container 5. The following description focuses on differences from Embodiment 2. Some configuration and effect similar to those in Embodiment 2 may not be described. Fig. 7 shows redox flow battery system 1 cut at the same position as indicated in Fig. 6. In Fig. 7, as well as Fig. 6, only bund 42 that liquid containment structure 4 comprises is shown in cross section for the sake of illustration.

### [Sub-Container]

Sub-container 5 reserves an electrolyte to be supplied to battery cells inside main container 2. Sub-container 5 has a coating layer coating an inner surface of sub-container 5. The coating layer is made of an electrically insulating material resistant to electrolyte, e.g., resin. For the shape, material, and size of sub-container 5, the description of the section for main container 2 may be referred to. Sub-container 5 may be an international ocean freight container. Sub-container 5 is disposed on the upper surface of ceiling portion 35 of concrete tank 3. Main container 2 is disposed on the upper surface of a ceiling portion 55 of sub-container 5.

Although not shown, concrete tank 3 includes a fixing structure. The fixing structure fixes sub-container 5 to the upper surface of ceiling portion 35 of concrete tank 3. The fixing structure, as well as fixing structure 7 of Embodiment 1 described with reference to Fig. 4, may be a projection onto which a recess provided in a bottom portion of sub-container 5 is fitted. The fixing structure may be a twist lock. Sub-container 5 may include a fixing structure to fix main container 2 to the upper surface of ceiling portion 55 of sub-container 5. The fixing structure of sub-container 5 is similar to the fixing structure of concrete tank 3.

Redox flow battery system 1 of Embodiment 3 easily reserves the electrolyte in an increased amount by sub-container 5 transported thereto. As sub-container 5 is disposed under main container 2, liquid leaking from concrete tank 3 and sub-container 5 does not come into contact with main container 2, battery cell 10 in particular. The height of bund 42 of liquid containment structure 4 may be increased according to the amount of the electrolyte reserved in sub-container 5. The adjusted height suppresses spreading of leaked electrolyte 9 to an outside of bund 42 even when sub-container 5 is provided.

### <<Embodiment 4>>

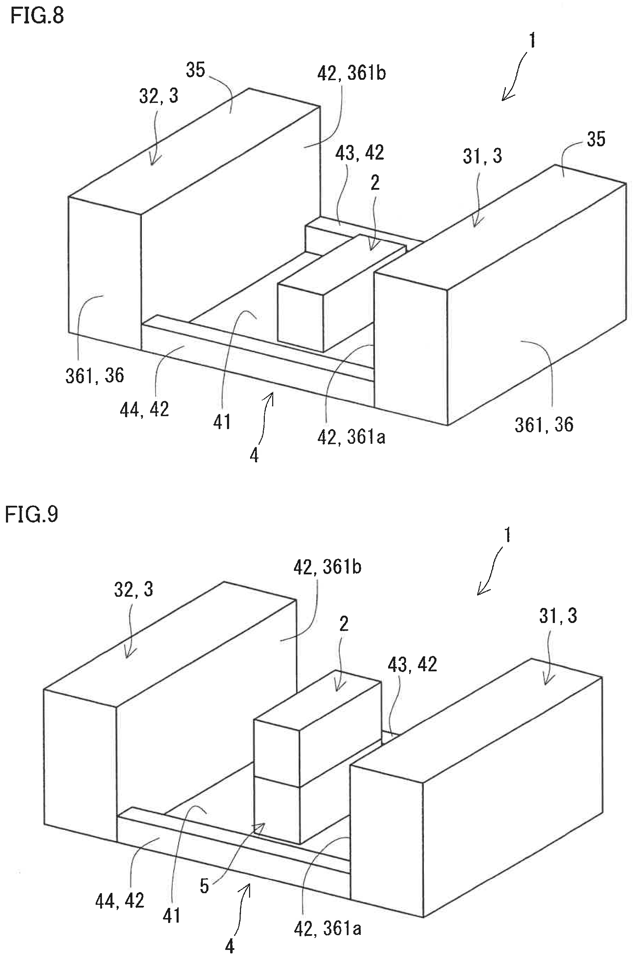

Redox flow battery system 1 of Embodiment 4 will be described with reference to Fig. 8. Redox flow battery system 1 of Embodiment 4 is different from redox flow battery system 1 of Embodiment 1 in that main container 2 and concrete tank 3 are horizontally spaced and that the former further comprises liquid containment structure 4. The following description focuses on differences from Embodiment 1. Some configuration and effect similar to those in Embodiment 1 may not be described.

### [Concrete Tank]

Concrete tank 3 has first concrete tank 31 and second concrete tank 32 horizontally spaced so as to sandwich main container 2. This eliminates the necessity of stacking main container 2 on ceiling portion 35 of concrete tank 3. First concrete tank 31 and second concrete tank 32 of the present example are disposed such that first concrete tank 31 and second concrete tank 32 have their respective lengths in parallel directions. First concrete tank 31, second concrete tank 32, and main container 2 are disposed such that their respective lengths are in parallel directions. Although not shown, first concrete tank 31 and second concrete tank 32 of the present example each have one first space. In the present example, the positive electrolyte is reserved in the first space of first concrete tank 31, and the negative electrolyte is reserved in the first space of second concrete tank 32.

### [Liquid Containment Structure]

Bund 42 of liquid containment structure 4 has a first outer wall portion 361a of first concrete tank 31, a second outer wall portion 361b of second concrete tank 32, a first coupling wall portion 43, and a second coupling wall portion 44. First outer wall portion 361a is a part of outer wall portion 361 of first concrete tank 31. Second outer wall portion 361b is a part of outer wall portion 361 of second concrete tank 32. First coupling wall portion 43 and second coupling wall portion 44 couples first outer wall portion 361a and second outer wall portion 361b so as to sandwich main container 2. First coupling wall portion 43 of the present example is connected to first ends of first and second outer wall portions 361a and 361b in a direction along their lengths. Second coupling wall portion 44 of the present example is connected to second ends of first and second outer wall portions 361a and 361b in the direction along their lengths. First coupling wall portion 43 and second coupling wall portion 44 are configured to project upward from the upper surface of base 41 of liquid containment structure 4. The heights of first and second coupling wall portions 43 and 44 and the area of the region surrounded by bund 42 can be appropriately selected according to the maximum amount of electrolyte 9 leaked. Base 41 of liquid containment structure 4 is surrounded by first outer wall portion 361a, second outer wall portion 361b, first coupling wall portion 43, and second coupling wall portion 44. Base 41, first coupling wall portion 43, and second coupling wall portion 44 are a concrete structure integrated into first concrete tank 31 and second concrete tank 32 by the same concrete as that of first concrete tank 31 and second concrete tank 32.

Redox flow battery system 1 of Embodiment 4 has a larger region of outer wall portion 361 used for liquid containment structure 4 than Embodiment 2 and Embodiment 3. This facilitates reducing an amount of concrete used for bund 42.

### <<Embodiment 5>>

Redox flow battery system 1 of Embodiment 5 will be described with reference to Fig. 9. Redox flow battery system 1 of Embodiment 5 is different from redox flow battery system 1 of Embodiment 4 in that the former further comprises sub-container 5 disposed inside bund 42. The following description focuses on differences from Embodiment 4. Some configuration and effect similar to those in Embodiment 4 may not be described.

### [Sub-Container/Main Container]

Sub-container 5 is disposed on the upper surface of base 41 of liquid containment structure 4. Main container 2 is disposed on the upper surface of ceiling portion 55 of sub-container 5. Therefore, in redox flow battery system 1 of Embodiment 5, as well as that of Embodiment 3, liquid leaking from concrete tank 3 and sub-container 5 does not come into contact with main container 2, battery cell 10 in particular. In contrast to the present example, main container 2 and sub-container 5 may be laterally aligned on the upper surface of base 41.

### <<Embodiment 6>>

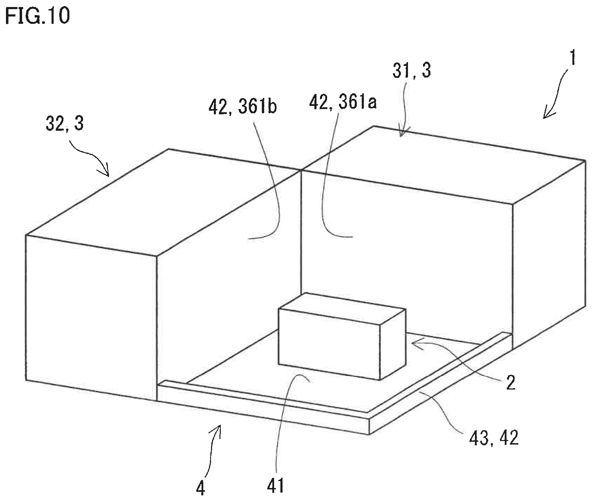

Redox flow battery system 1 of Embodiment 6 will be described with reference to Fig. 10. In redox flow battery system 1 of Embodiment 6, as well as redox flow battery system 1 of Embodiment 4, concrete tank 3 includes first concrete tank 31 and second concrete tank 32. Redox flow battery system 1 of Embodiment 6 is different from redox flow battery system 1 of Embodiment 4 in that first concrete tank 31 and second concrete tank 32 are disposed so as to be partially, horizontally in contact with each other. The following description focuses on differences from Embodiment 4. Some configuration and effect similar to those in Embodiment 4 may not be described.

First concrete tank 31 and second concrete tank 32 are disposed so that a direction in which first concrete tank 31 has its length is orthogonal to a direction in which second concrete tank 32 has its length. A corner of a first end of first concrete tank 31 in its longitudinal direction and a corner of a first end of second concrete tank 32 in its longitudinal direction are connected together. First outer wall portion 361a of first concrete tank 31 and second outer wall portion 361b of second concrete tank 32 are connected together in a series in the form of the letter L. Main container 2 of the present example is disposed so that a direction in which main container 2 has its length is parallel to a direction in which first concrete tank 31 has its length.

Bund 42 of liquid containment structure 4 is composed of first outer wall portion 361a of first concrete tank 31, second outer wall portion 361b of second concrete tank 32, and an L-shaped first coupling wall portion 43. A first end of first coupling wall portion 43 is connected to an end of first outer wall portion 361a far from second concrete tank 32. A second end of first coupling wall portion 43 is connected to an end of second outer wall portion 361b far from first concrete tank 31.

### <<Embodiment 7>>

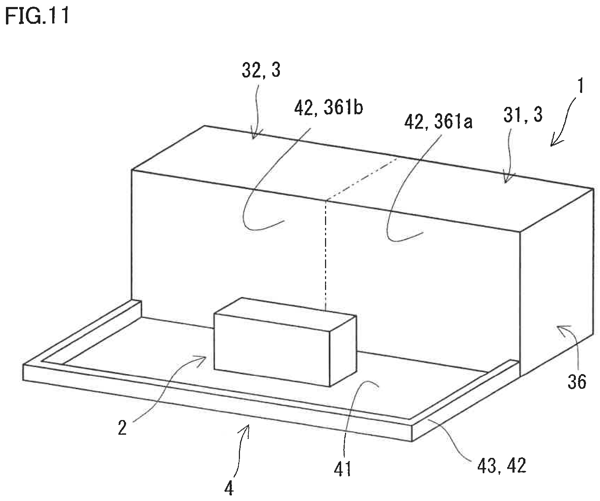

Redox flow battery system 1 of Embodiment 7 will be described with reference to Fig. 11. Redox flow battery system 1 of Embodiment 7 is different from redox flow battery system 1 of Embodiment 6 in how first concrete tank 31 and second concrete tank 32 are disposed. The following description focuses on differences from Embodiment 6. Some configuration and effect similar to those in Embodiment 6 may not be described. In Fig. 11, the center line of the thickness of side wall portion 36 partitioning adjacent first spaces is indicated by a two-dot chain line.

First concrete tank 31 and second concrete tank 32 are disposed adjacent to each other such that a direction in which first concrete tank 31 has its length and that in which second concrete tank 32 has its length are aligned in a single straight line. A common wall portion is disposed between first concrete tank 31 and second concrete tank 32. An outer surface of first outer wall portion 361a of first concrete tank 31 and an outer surface of second outer wall portion 361b of second concrete tank 32 are connected in a series so as to be flush.

Bund 42 of liquid containment structure 4 is composed of first outer wall portion 361a of first concrete tank 31, second outer wall portion 361b of second concrete tank 32, and a U-shaped first coupling wall portion 43. A first end of first coupling wall portion 43 is connected to an end of first outer wall portion 361a far from second concrete tank 32. A second end of first coupling wall portion 43 is connected to an end of second outer wall portion 361b far from first concrete tank 31.

### <<Embodiment 8>>

Although not shown, a redox flow battery system of Embodiment 8 may be that of Embodiment 6 or Embodiment 7 plus sub-container 5 described in Embodiment 5.

### <<Additional Note>>

In connection with the embodiments of the present invention described above, an additional note is further disclosed, as follows.

### [Additional Note 1]

A concrete tank comprising:
a first space in which an electrolyte to be supplied to a battery cell is reserved; and
an outer wall constituting at least a part of a bund surrounding a periphery of the battery cell.

When the electrolyte is sent from the concrete tank of Additional Note 1 to the battery cell and leaks from the battery cell, the concrete tank can prevent the electrolyte from leaking to the outside of the bund.

### REFERENCE SIGNS LIST

1 redox flow battery system, 10 battery cell, 100 cell stack, 2 main container, 21 bottom portion, 211 recess, 22 ceiling portion, 23 first side wall portion, 24 second side wall portion, 3 concrete tank, 31, 31a, 31b first concrete tank, 32, 32a, 32b second concrete tank, 33, 33a, 33b first space, 331 first inner surface, 34 second space, 341 second inner surface, 35 ceiling portion, 35a wall portion, 351 first wall portion, 352 second wall portion, 353 third wall portion, 354 fourth wall portion, 35b projection, 36 side wall portion, 361 outer wall portion, 361a first outer wall portion, 361b second outer wall portion, 362 inner wall portion, 37 partition, 38a common wall portion, 38b wall portion for additional installation, 39 rib, 4 liquid containment structure, 41 base, 42 bund, 43 first coupling wall portion, 44 second coupling wall portion, 5 sub-container, 55 ceiling portion, 6 pump, 7 fixing structure, 9 electrolyte.

## Claims

1. A redox flow battery system comprising:
a main container in which a battery cell is accommodated; and
a concrete tank having a first space in which an electrolyte to be supplied to the battery cell is reserved.

2. The redox flow battery system according to claim 1, comprising a liquid containment structure having a bund surrounding a periphery of the main container, wherein
at least a part of the bund is formed of an outer wall of the concrete tank.

3. The redox flow battery system according to claim 2, comprising a first container disposed on an upper surface of a ceiling portion of the concrete tank, wherein
the first container is the main container.

4. The redox flow battery system according to claim 2, comprising:
a sub-container in which the electrolyte to be supplied to the battery cell is reserved; and
a first container disposed on an upper surface of a ceiling portion of the concrete tank, wherein
the first container is the sub-container, and
the main container is disposed on an upper surface of a ceiling portion of the first container.

5. The redox flow battery system according to claim 3 or 4, wherein
the concrete tank has a wall portion projecting upward from the upper surface of the ceiling portion of the concrete tank so as to surround a periphery of the first container,
the liquid containment structure further has a base on which the first container is disposed,
the bund is the wall portion, and
the base is the ceiling portion of the concrete tank.

6. The redox flow battery system according to claim 3 or 4, wherein the concrete tank has a fixing structure to fix the first container to the upper surface of the ceiling portion of the concrete tank.

7. The redox flow battery system according to claim 3 or 4, comprising a pump that passes the electrolyte to the battery cell, wherein
the concrete tank further has a second space in which the pump is accommodated.

8. The redox flow battery system according to claim 7, wherein the first container is disposed on the upper surface of the ceiling portion of the concrete tank at a location above the second space.

9. The redox flow battery system according to claim 3 or 4, wherein the first container is disposed so as to overlap a side wall portion of the concrete tank.

10. The redox flow battery system according to any one of claim 1 to claim 9, wherein the concrete tank has a rib projecting toward the first space.

11. The redox flow battery system according to any one of claim 1 to claim 10, wherein
the concrete tank has a first concrete tank and a second concrete tank horizontally adjacent to each other, and
a side wall portion of the first concrete tank and a side wall portion of the second concrete tank have a common wall portion shared by each other.

12. The redox flow battery system according to any one of claim 1 to claim 10, wherein a side wall portion of the concrete tank has a wall portion for additional installation, shared with a side wall portion of a concrete tank additionally installed.

13. The redox flow battery system according to claim 2, wherein the main container and the concrete tank are horizontally spaced.

14. The redox flow battery system according to claim 13, wherein the bund has a side wall portion of the concrete tank.

15. The redox flow battery system according to claim 14, wherein
the concrete tank has a first concrete tank and a second concrete tank horizontally spaced so as to sandwich the main container,
the liquid containment structure further has a base on which the main container is disposed,
the bund has:
a first outer wall portion of the first concrete tank;
a second outer wall portion of the second concrete tank; and
a first coupling wall portion and a second coupling wall portion coupling the first outer wall portion and the second outer wall portion together so as to sandwich the main container, and
the base is surrounded by the first outer wall portion, the second outer wall portion, the first coupling wall portion, and the second coupling wall portion.

16. The redox flow battery system according to claim 15, comprising a sub-container that reserves the electrolyte to be supplied to the battery cell, wherein the sub-container is disposed inside the bund.
